(19) Europäisches Patentamt
European Patent Office
Office européen des brevets

(11) Publication number: **0 317 205 B1**

(12) **EUROPEAN PATENT SPECIFICATION**

(45) Date of publication of patent specification: **03.05.95**

(51) Int. Cl.[6]: **C08G 77/54**, C08G 73/10

(21) Application number: **88310660.1**

(22) Date of filing: **11.11.88**

The file contains technical information submitted after the application was filed and not included in this specification

(54) **Imido group-containing silicon oligomers and cured product thereof, and their preparation.**

(30) Priority: **12.11.87 JP 284172/87**
**13.11.87 JP 285264/87**

(43) Date of publication of application:
**24.05.89 Bulletin 89/21**

(45) Publication of the grant of the patent:
**03.05.95 Bulletin 95/18**

(84) Designated Contracting States:
**CH DE FR LI**

(56) References cited:
**EP-A- 0 164 920**
**US-A- 3 901 913**

(73) Proprietor: **Chisso Corporation**
**6-32, Nakanoshima 3-chome**
**Kita-ku**
**Osaka-shi**
**Osaka-fu (JP)**

(72) Inventor: **Kunimune, Koichi**
**12-2, Ichihara**
**Ichihara-shi**
**Chiba-ken (JP)**
Inventor: **Kato, Haruo**
**10-1, Otsutomo-cho**
**Kanazawa-ku**
**Yokohama-shi**
**Kanagawa-ken (JP)**
Inventor: **Kutsuzawa, Yoshiya**
**10-1, Otsutomo-cho**
**Kanazawa-ku**
**Yokohama-shi**
**Kanagawa-ken (JP)**

(74) Representative: **Lamb, John Baxter et al**
**MARKS & CLERK,**
**57-60 Lincoln's Inn Fields**
**London WC2A 3LS (GB)**

**EP 0 317 205 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to imido group-containing soluble silicon oligomers, an imido group-containing cured silicon material and the preparation thereof. More specifically, the invention relates to an imido group-containing silicon oligomer which has a viscosity suitable for use in a coating operation and which is capable of forming tough coating films having good properties.

Among the organic polymers, polyimide resins have maximum heat resistance and a low coefficient of thermal expansion but are inferior to inorganic compounds in these respects.

In order to improve the surface hardness and wear resistance of polyimide resins it has been proposed to fill them with inorganic fillers. In this case, however, breakage is liable to occur between the filler and the polyimide resin.

On the other hand, silica, as an example of an inorganic material, has practically desirable characteristics. e.g. low coefficient of thermal expansion and high hardness in addition to excellent heat resistance. However, silica is brittle and poor in processability and mouldability so that the practical applications of silica are limited.

In order to improve processability and mouldability, a variety of compounds have been synthesized in which groups which are bonded to each silicon are partially replaced by alkyl groups. This technique is successful to some extent, for example as polydimethylsiloxanes and the like, but such compounds have a noticeable deterioration of heat resistance, a perceptible increase in coefficient of thermal expansion and a marked degradation of hardness.

To overcome these problems, many techniques of chemically combining polyimides with silicon compounds have been reported (e.g., Japanese Laid-Open Patent Publications Nos. 143328/1982, 7473/1983 and 13631/1983).

These techniques are based on the partial replacement of a diamine component, which is a starting material for a polyimide, by a polydisiloxane which is terminated with diamines at both ends.

Japanese Patent Publication No. 32162/1983 suggests a crosslinked polyimide having a siloxane group which can be prepared by mixing a polyamide acid, which is terminated with reactive silicon compounds at both ends, with a polydisiloxane having hydroxyl groups at both ends, and then heating the mixture.

Futhermore, as a process of forming silica films, there has been suggested a technique of calcining a reactive silane such as an alkoxy silane or an acetoxy silane (e.g.., Japanese Patent Publications Nos. 16488/1977 and 20825/1977, Japanese Laid-Open Patent Publications Nos. 34258/1980 and 250032/1986, and U.S. Patent No. 4408009).

Products disclosed in Japanese Publications Nos. 143328/1982, 7473/1983 and 13631/1983 still have disadvantages such as noticeable deterioration of heat resistance, perceptible increase in coefficient of thermal expansion and marked degradation of hardness.

The compound disclosed in Japanese Patent Publication No. 32162/1983 has good affinity for inorganic compounds but cannot give materials having a low coefficients of thermal expansion.

With regard to the technique of calcining a reactive silane, such as an alkoxy or acetoxy silane, films synthesized by this technique are very brittle, and the thickness of the films is at most several thousand angstroms.

An object of the present invention is to provide an imido group-containing silicon oligomer which has a viscosity suitable for the formation of coating films by coating operations and which is capable of forming tough cured coating films having good heat resistance, high hardness, strong adhesion and a low coefficient of thermal expansion, by calcination of a coated film.

According to one embodiment of the invention there is provided an imido group-containing soluble silicon oligomer which has a logarithmic viscosity number of 0.05 to 0.5 dl/g when measured at a concentration of 0.5 g/dl at 30 ± 0.01 °C and which comprises a compound of the formula:

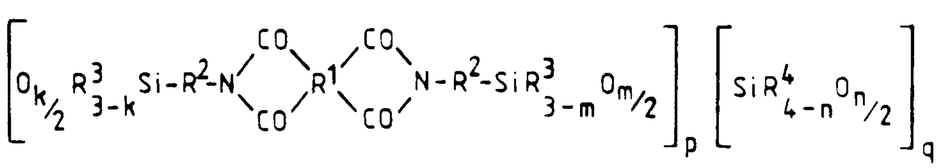

in which $R^1$ is a tetravalent carbon cyclic aromatic group and the two carbonyl groups comprising one imide group are attached ortho to each other; the groups $R^2$ are each a group

$-(CH_2)_t-$,

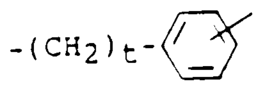, 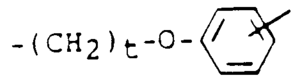 or 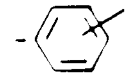

(in which t is an integer from 1 to 4); and $R^3$ and $R^4$ are the same or different and each is a $C_1$-$C_6$ alkyl group, a phenyl group or an alkyl-substituted phenyl group having 7 to 12 carbon atoms; k and m are each 0,1,2 or 3 and the sum of k and m is 1 or more; n is from greater than 1 to 4, except 2; and each of p and q is a positive integer and the ratio q/p is from 0.03 to 33;

the aforesaid logarithmic viscosity number being $\eta$inh represented by the following formula:

$$\eta_{inh} = \ell n(\eta/\eta_o)/C$$

wherein $\eta$ is a viscosity measured at 30 ± 0.01 °C at a concentration of 0.5 g/dl in a solvent by the use of a Ubbelohde's viscometer, $\eta$o is a viscosity of the solvent at the same temperature by the use of th e same viscometer, and C is a concentration of 0.5 g/dl.

The above imido group-containing silicon oligomer can be prepared by adding a solvent (in an amount of 70% or more by weight based on the total weight) to a mixture of a mole of a compound of formula (II) or a diester thereof

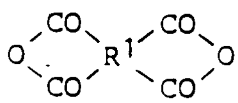 (II)

(in which $R^1$ is as defined above);

b moles of compounds of the formulae:

$H_2N-R^2- SiR^3{}_{3-k} X_k$ (III)

and

$H_2N-R^2 - SiR_3{}^3{}_{3-m} X_m$ (III')

(in which $R^2$, $R^3$, k and m are as defined above and X is a halogen atom or an alkoxy, acetoxy or hydroxyl group); and

c moles of a compound of the formula:

$SiR^4{}_{4-n} X_n$ (IV)

(in which $R^1$, X and n are as defined above); the ratio of the compounds of formula (II), (III), (III') and (IV) satisfying the equations:

$1.8 \leqq b/a \leqq 2.2$ (V)

$0.03 \leqq c/a \leqq 33$ (VI)

and subsequently reacting the mixture at a temperature of from 0 to 20 °C for from 0.2 to 40 hours.

A cured imido group-containing silicon oligomer can be prepared by heating a solution including the above imido group-containing silicon oligomer at a temperature of 50 to 500 °C to evaporate the solvent and to simultaneously crosslink/cure the oligomer.

The cured material may be represented by the formula:

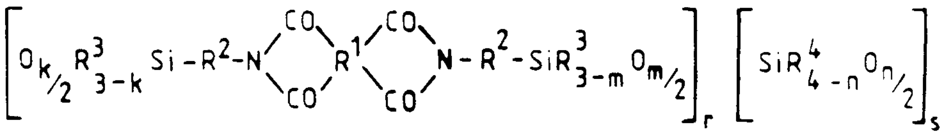 (I')

(in which each of r and s is a positive integer and larger than each of p and q, because the degree of siloxane condensation is different from those of the oligomer, and the ratio s/r is from 0.03 to 33).

An imido group containing silicone oligomer of the present invention may be prepared by mixing and heating, in a solvent, four compounds of the above-mentioned formulae (II), (III), (III') and (IV) or three compounds in the case that the compounds of the formulae (III) and (III') are identical. With regard to this preparation technique, the first procedure comprises mixing compounds having the formulae (II), and (III), (III') and (IV), then reacting the mixture at a temperature of 0 to 200 °C for 0.2 to 10 hourse, and performing further reaction at a temperture of 60 to 200 °C for 0 to 30 hours. The second procedure comprises mixing the compounds represented by the formulae (II), (III) and (III'), then reacting the mixture at a temperature of 0 to 200 °C for 0.2 to 10 hours, adding the compound of the formula (IV) thereto, and performing further reaction at a temperature of 60 to 200 °C for 0.2 to 30 hours, preferably for 0.2 to 20 hours. The third procedure comprises mixing the compounds represented by the formulae (II), (III), (III′) and (IV), reacting the mixture at a temperature of 0 to 200 °C for 0.2 to 10 hours, adding an acid and/or a small amount of water, and performing further reaction at 60 to 200 °C for 0.2 to 20 hours. And the fourth procedure comprises mixing the compounds having the formulae (II), (III) and (III′), reacting the mixture at a temperature of 0 to 200 °C for 0.2 to 10 hours, adding the compound having the formula (IV) and an acid and/or a small amount of water, and performing further reaction at a temperature of 60 to 200 °C for 0.2 to 20 hours.

Examples of the tetracarboxylic dianhydride and its diester represented by the general formula (II) include pyromellitic dianhydride, 3,3′,4,4′-biphenyltetracarboxylicdianhydride, 2,2′,3,3′-biphenyltetracarboxylic dianhydride, 2,3,3′,4′-biphenyltetracarboxylic dianhydride, 3,3′,4,4′-benzophenonetetracarboxylic dianhydride, 2,3,3′,4′-benzophenonetetracarboxylic dianhydride, 2,2′,3,3′-benzophenonetetracarboxylic dianhydride, bis(3,4-dicarboxyphenyl) ether dianhydride, bis(3,4-dicarboxyphenyl)sulfonic dianhydride, 1,2,5,6-naphthalenetetracarboxylic dianhydride, 2,3,6,7-naphthalenetetracarboxylic dianhydride, and diesters of these compounds and alcohols.

Examples of the aminosilicon compounds represented by the general formulae (III) and (III′) are as follows:

$NH_2-(CH_2)_3-Si(OCH_3)_3$,
$NH_2-(CH_2)_3-Si(OC_2H_5)_3$,
$NH_2-(CH_2)_3-Si(CH_3)(OCH_3)_2$,
$NH_2-(CH_2)_3-Si(CH_3)(OC_2H_5)_2$,
$NH_2-(CH_2)_3-Si(C_2H_5)(OC_3H_7)_2$,
$NH_2-(CH_2)_4-Si(OCH_3)_3$,
$NH_2-(CH_2)_4-Si(OC_2H_5)_3$,
$NH_2-(CH_2)_4-Si(CH_3)(OC_2H_5)_2$,

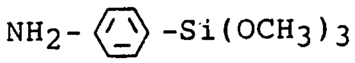,
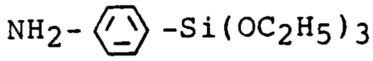,
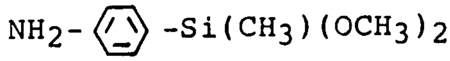,
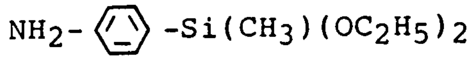,
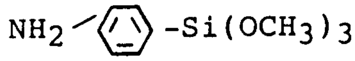,
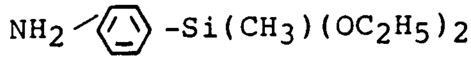,
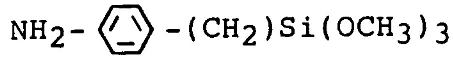,
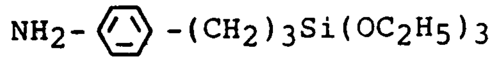,
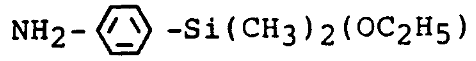, and
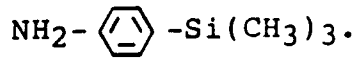.

Furthermore, examples of the silicon compound represented by the general formula (IV) include $Si(OCH_3)_4$, $Si(CH_3)(OCH_3)_3$, $Si(C_6H_{13})(OCH_3)_3$, $Si(CH_3)_2(OCH_3)_2$, $Si(CH_3)_3(OCH_3)$, $Si(OC_2H_5)_4$, $Si(CH_3)(OC_2H_5)_3$, $Si(CH_3)_2(OC_2H_5)_2$, $Si(CH_3)_3(OC_2H_5)$,

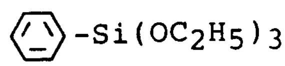,

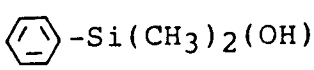,

$Si(OCOCH_3)_4$,

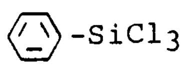,

etc.

Examples of the solvent (hereinafter referred to occasionally as reaction solvent) used in the reaction of the above-mentioned raw materials in the present invention include N-methylpyrrolidone, dimethylacetamide, dimethylformamide, dimethyl sulfoxide, tetramethylurea, pyridine, dimethyl sulfone, hexamethylsulfonamide, methylformamide, N-acetyl-2-pyrrolidone, toluene, xylene, ethylene glycol monomethyl ether, ethylene glycol monoethyl ether, ethylene glycol monobutyl ether, diethylene glycol monomethyl ether, diethylene glycol monoethyl ether, diethylene glycol dimethyl ether, diethylene glycol diethyl ether and mixtures of two or more thereof. In addition, mixed solvents each containing 30% by weight or more of the above-mentioned solvent and another solvent can be also used in the present invention.

Now, reference will be made to reactions of the present invention.

In the reaction solvent, there are mixed a mole of tetracarboxylic dianhydride represented by the formula (II) or its diester, b mole of aminosilicon compounds represented by the formulae (III) and (III′) and c mole of a silicon compound represented by the formula (IV) in order to perform the reaction.

In this case, ratios of these components should be in ranges of the above-mentioned formulae (V) and (VI). The formula (V) indicates a substantially equivalent relation for the formation of the imide from the

tetracarboxylic dianhydride and the aminosilicon compound, and when the mixing ratio is less than the lower limit of the formula (VI), a polyimide predominates, and when it is more than the upper limit thereof, a silicon compound predominates, so that characteristics of the compound according to the present invention decline.

The reaction solvent is preferably used in an amount of 70% by weight or more based on the total amount of this solvent and the raw materials. When the content of the solvent is less than the above-mentioned level, the solution gels during the reaction at times, so that flowability is lost unpreferably.

The reaction of the three or four kinds of raw materials is performed at a temperature of 0 to 200 °C for 0.2 to 10 hours in the solvent, or alternatively the reaction of the former two or three kinds of the materials is first carried out at a temperature 0 to 200 °C for 0.2 to 10 hours, and then the latter raw material is added thereto. Afterward, if necessary, an acid and/or a small amount of water is added thereto, and the reaction is then performed at a temperature of 60 to 200 °C for 0.2 to 30 hours. The addition of the acid and/or water is a known means for accelerating the condensation reaction of the siloxane.

Examples of the above-mentioned acid include mineral acids, organic acids, acidic ion exchange resins and solid acidic materials in which inorganic acids are supported in carriers.

As the mineral acids, hydrochloric acid, sulfuric acid and nitric acid are preferable. As the organic acids, there can be used formic acid, acetic acid, propionic acid, oxalic acid, citric acid, malonic acid, salicylic acid, chloroacetic acid, fluoroacetic acid, benzenesulfonic acid and toluenesulfonic acid. As the aforesaid acidic ion exchange resins, there are sulfonic acid type strongly acidic cationic exchange resins and super acidic cationic resins, and preferable examples of the ion exchange resins include Diaion-SKIB-H, Diaion-PK-228-H, Amberlite-IR-120B, Amberlite-118, Amberlite-112, Amberlite-122, Amberlite-124, Amberlite-200C and Naphion-H.

Usable examples of the solid acidic materials include silica, alumina-silica, zirconia and active carbon supporting sulfuric acid or phosphoric acid.

The amount of the acid to be added is preferably 1/10 (kb1 + mb2 + nc) mole or less wherein b1 and b2 are amounts of the compounds III and III′ added respectively, but the acid may be present in an amount above this level.

As for the amount of water to be added, it may be [(k-1)b1 + (m-1)b2 + nc)] mole or less wherein b1 and b2 mean the same as above, but when it is in excess of this level, reaction rate can be accelerated.

In the first reaction step, the acid anhydride having the formula (II) or its diester is reacted with the aminosilicon compounds having the formulae (III) and (III′) to form an amido acid or an imide. Depending upon conditions, an X group attached to the silicon at the end of this amide acid or imide compound gives rise to siloxane condensation reaction at times in the presence or absence of water contained in the solvent and/or water formed by the reaction of the amide acid toward the imide, so that the molecular weight of the amide acid or the imide increases.

At this time, if the compound of the formula (IV) is coexistent in the system, co-condensation reaction therewith takes place sometimes. When being present in the system, the amide acid should be converted into an imido group by temperature rise. In such a first reaction step, the soluble imido oligomer of the present invention can be obtained in some cases. However, if the compound of the formula (IV) is not present in the reaction system of the first step, or if it is present but in too a small amount, the compound of the formula (IV) is added thereto, and if necessary water and/or an acidic accelerator are (is) added thereto so as to accelerate the siloxane condensation reaction and imide formation reaction.

According to the procedure described above, the soluble imide oligomer of the present invention can be obtained in which logarithmic viscosity number is within the range of 0.05 to 0.5 dl/g and which has desirable molecular weight.

When the logarithmic viscosity number is less than 0.05, coating properties are insufficient, and the oligomer in which the number is in excess of 0.5 is difficult to synthesize.

The fundamental structure of the oligomer obtained by the method of the present invention can be represented by the formula (I), but at the end portion of the formula (I),

$$-\overset{|}{\underset{|}{Si}}-X \quad \text{or} \quad -\overset{|}{\underset{|}{Si}}-OH$$

which has been partially unreacted is present.

Thus, the oligomer of the present invention can be then calcined in order to advance the condensation reaction of the siloxane, with the result that curing and insolubilization are made owing to intermolecular crosslinking. In this way, the cured material structure can be prepared from the oligomer of the present

invention.

With regard to the parameters p and q in the formula (I), as the ratio of q/p becomes great, characteristics of the imide become weak and those of the silicon compound come to predominate in the obtained structure.

As the ratio of the q/p increases and as values of k or m and n increases, characteristics of the inorganic material (silica) become strong, so that the coefficient of thermal expansion loweres and the hardness heightens noticeably. For this reason, the ratio of q/p, i.e., s/r is preferably in the range of 0.03 to 33.

Now, reference will be made to the utilization of the imide oligomer of the present invention.

In many cases, the imide oligomer prepared by the present invention is used in the state of a solution in which it is dissolved in a solvent such as a varnish, and therefore the solution obtained by the method of the present invention is preferably concentrated or diluted with the solvent, when used. The solvent for use in the dilution may be the same as the above-mentioned reaction solvent.

From the solution of the imido oligomer of the present invention, molded articles may be obtained in any known manner. For example, the oligomer solution is shed onto a glass plate, a copper plate or an aluminum plate, and heating is then carried out to remove the used solvent, and simultaneously crosslinking makes progress owing to siloxane bond, so that a hard and tough coating film is formed thereon.

The formation of laminated composite materials can also be achieved in such an operation as described above successively, but they may be obtained in another way which comprises applying a varnish as an adhesive between plural heterogeneous material sheets, and calcining them.

Furthermore, the laminated materials having reinforced films can also be formed by impregnating a filler, a glass fiber or the like with a varnish, and then calcining it to cure the varnish.

Conditions for the calcination depend upon a kind of used solvent, the thickness of the coating film and the like, but calcination temperature is usually in the range of 50 to 500 ° C, preferably in the range of 200 to 400 ° C and calcination time is from about 0.5 to about 2 hours.

The cured material obtained from the imide oligomer of the present invention is excellent in heat resistance and mechanical, electrical and adhesive properties. Therefore, the oligomer of the present case can be employed in various coating agents or adhesives for glass, ceramics, silicon wafers and metallic oxides, adhesives, inorganic fibers such as glass fibers. The cured material which is obtained by subjecting the above oligomer to the steps of impregnation and calcination is useful as a composite structure in these articles.

The imide oligomer of the present invention has a desirable logarithmic viscosity number, and therefore the viscocity of its solution is proper, which enables the good operation of coating.

Furthermore, when the coating film of the oligomer is calcined, siloxane condensation reaction makes progress to give rise to intermolecular bonding, so that the hard and tough cured coating film is obtained. In addition, the oligomer coating film can exhibit a strong adhesive function for glasses, ceramics, silicon wafers and various metallic oxides.

Since the cured material of the present invention has the enhanced heat resistance and the low coefficient of thermal expansion which is close to that of inorganic compounds as just described, it is desirable as a laminating material which is laminated onto inorganic sheets.

Moreover, in the cured material of the present invention, brittleness which is one of drawbacks of the inorganic compounds is eliminated, and hence it can be formed in the state of thicker coating films as surface coating materials. In addition to this advantage, the cured material of the present case is harder than organic coating films of polyimides, and thus it has practical value as a material for the boundary between organic and inoganic materials.

The cured material of the present invention can be manufactured, in an easy manner of cast molding or coating and heating, from the soluble oligomer which can be synthesized from the easily available raw materials under moderate conditions. Additionally, the excellent structure of the cured material can be obtained by impregnating an inorganic fiber such as a glass fiber with the oligomer solution of the present case, followed by calcining. Since the cured material has excellent heat resistance, mechanical and electrical properties and adhesive force, the oligomer of the present invention can exhibit extremely excellent performace as various coating materials and adhesives.

## EXAMPLES

Now, the present invention will be described in detail in reference to examples, comparative examples and use tests.

Example 1

The atmosphere in a 1-liter flask equipped with a stirrer, a dropping funnel, a thermometer, a condenser and a nitrogen replacing device was first replaced with a nitrogen gas, and 500 g of methyl carbitol which had been dehydrated and purified and 4.93 g (0.0231 mole) of aminophenyltrimethoxysilane (hereinafter referred to simply as "APMS") (meta/para = 68/32) were then placed therein. While this solution was maintained at a temperature of 30 to 35 °C, 2.52 g (0.0116 mole) of pyromellitic dianhydride (hereinafter referred to simply as "PMDA") was added thereto through the dropping funnel over 30 minutes, and reaction was then performed at this temperataure for 1 hour and further at 120 °C for 3 hours. Next, 48.14 g (0.231 mole) of tetraethoxysilane, 4.00 g of acetic acid and 50 ml of water were added to the flask, maintaining the temperature at 70 °C, and reaction was further carried out for 10 hours, until unreacted tetraethoxysilane was not detected in the reaction solution any more, in order to prepare an imido group-containing silicon oligomer solution of the present invention which was transparent and light-brown.

This oligomer had a logarithmic viscosity number of 0.062 dl/g, and the infrared absorption spectrum of the oligomer which was obtained by a KBr tablet method is shown in Fig. 1.

Example 2

By the use of the same devices and procedure as in Example 1, 3.39 g (0.0159 mole) of APMS (meta/para = 68/32) was added to 500 g of methyl carbitol, and afterward 2.56 g (0.00795 mole) of 3,3′,4,4′-benzophenonetetracarboxylic dianhydride (hereinafter referred to simply as "BTDA") was then added thereto over 30 minutes. Reaction was then performed at 40 °C for 1 hour and further at 150 °C for 1.5 hours.

Afterward, thereto were added 49.65 g (0.238 mole) of tetraethoxysilane, 5.50 g of acetic acid and 30 ml of water, followed by reaction at 75 °C for 12 hours. At this point of time, unreacted tetraethoxysilane was not detected in the reaction solution any more.

The thus obtained imido group-containing silicon oligomer solution of the present invention was light-brown and transparent, and the logarithmic viscosity number of the oligomer was 0.056 dl/g.

Example 3

By the use of the same devices and procedure as in Example 1, 10.93 g (0.0512 mole) of APMS (para = 100%) was added to 500 g of methyl carbitol, and afterward 5.59 g (0.0256 mole) of PMDA was thrown thereinto over 30 minutes. Reaction was then performed at 30 °C for 1 hour and further at 120 °C for 3 hours.

Afterward, 39.01 g (0.256 mole) of tetramethoxysilane, 2.5 ml of acetic acid and 50 ml of water were added thereto, and reaction was then performed at 60 °C for 15 hours. At this point, unreacted tetramethoxysilane was not detected in the reaction solution any more.

The thus obtained imido group-containing silicon oligomer solution of the present invention was light-brown and transparent, and the logarithmic viscosity number of the oligomer was 0.063 dl/g.

Example 4

By the use of the same devices and procedure as in Example 1, 26.99 g (0.0838 mole) of BTDA, 35.74 g (0.168 mole) of APMS (para = 100%) and 25.50 g (0.168 mole) of tetramethoxysilane were added to a mixture of 375 g of methyl carbitol and 125 g of 2-butoxy ethanol, and reaction was then performed at 30 °C for 2 hours and continuously at 110 °C for 2 hours.

Afterward, to this solution was added 3.5 g of concentrated hydrochloric acid and 30 g of water, and reaction was then performed at 60 °C for 18 hours. At this point of time, unreacted tetramethoxysilane was not detected in the reaction solution any more. The thus obtained imido group-containing silicon oligomer solution of the present invention was brown and transparent, and the logarithmic viscosity number of the oligomer was 0.070 dl/g.

Example 5

By the use of the same devices and procedure as in Example 1, 21.23 g (0.0593 mole) of bis(3,4-dicarboxylphenyl) sulfone dianhydride and 25.29 g (0.119 mole) of APMS (para = 100%) were added to a mixture of 450 g of methyl carbitol and 50 g of N-methyl-2-pyrrolidone, and reaction was then performed at

100 ° C for 5 hours.

Afterward, to this solution were added 9.03 g (0.0593 mole) of tetramethoxysilane, 2.5 g of acetic acid and 20 g of water, and reaction was then performed at 70 ° C for 7 hours. At this point of time, unreacted tetramethoxysilane was not detected in the reaction solution any more.

The thus obtained imido group-containing silicon oligomer solution of the present invention was brown and transparent, and the logarithmic viscosity number of the oligomer was 0.18 dl/g.

Example 6

By the use of the same devices and procedure as in Example 1, 27.79 g (0.130 mole) of APMS (meta/para = 38/62) and 20.99 g (0.0651 mole) of BTDA were added to 500 g of 2-methoxy ethanol, and reaction was then performed at 40 ° C for 1 hour and further at 115 ° C for 3 hours. Afterward, to this solution were added 6.78 g (0.0325 mole) of tetraethoxysilane, 1.5 g of acetic acid and 10 g of water, and reaction was then performed at 80 ° C for 6 hours. At this point of time, unreacted tetraethoxysilane was not detected in the reaction solution any more.

The thus obtained imido group-containing silicon oligomer solution of the present invention was light-brown and transparent, and the logarithmic viscosity number of the oligomer was 0.21 dl/g.

Example 7

By the use of the same devices and procedure as in Example 1, 6.99 g (0.0238 mole) of 3,3′,4,4′-biphenyltetracarboxylic dianhydride (hereinafter referred to simply as "BPDA") were added to 500 g of methyl carbitol, and reaction was then performed at 120 ° C for 2 hours in order to link methyl carbitol with BPDA.

Afterward, to this solution was added 8.64 g (0.045 mole) of 3-aminopropylmethyldiethoxysilane, and reaction was performed at 120 ° C for 3 hours.

Moreover, 16.54 g (0.113 mole) of dimethyldiethoxysilane, 23.51 g (0.113 mole) of tetraethoxysilane, 3.5 g of acetic acid and 45 g of water were added thereto, and reaction was then performed at 70 ° C for 10 hours. At this point of time, unreacted dimethyldiethoxysilane and tetraethoxysilane were not detected in the reaction solution any more.

The thus obtained imido group-containing silicon oligomer solution of the present invention was light-brown and transparent, and the logarithmic viscosity number of the oligomer was 0.058 dl/g.

Example 8

The same procedure as in Example 5 was repeated with the exception that acetic acid was not added and that the secondary reaction was performed for 25 hours. When the seconday reaction was over, unreacted tetraethoxysilane was not detected in the reaction solution any more. The thus obtained imido group-containing silicon oligomer solution of the present invention was ligh-brown and transparent, and the logarithmic viscosity number of this oligomer was 0.25 dl/g.

Example 9

The same procedure as in Example 5 was repeated with the exception that the secondary reaction was performed without adding water. When 20 hours had elapsed, unreacted tetraethoxysilane was not detected in the reaction solution any more. The thus obtained imido group-containing oligomer solution of the present invention was light-brown and transparent, and this oligomer had a logarithmic viscosity number of 0.23 dl/g.

Example 10

The same procedure as in Example 5 was repeated with the exception that the secondary reaction was performed without adding acetic acid and water. When 28 hours had elapsed, unreacted tetraethoxysilane was not detected in the reaction solution any more. The thus obtained imido group-containing silicon oligomer of the present invention was light-brown and transparent, and this oligomer had a logarithmic viscosity number of 0.27 dl/g.

Comparative Example 1

By the use of the same devices and procedure as in Example 1, 55.56 g (0.267 mole) of tetraethoxysilane, 5.5 g of acetic acid and 60 g of water were added to 500 g of methyl carbitol, and reaction was then carried out at 80 ° C for 18 hours. At this point of time, unreacted tetraethoxysilane was not detected in the reaction solution any more, and a transparent tetraethoxysilane oligomer was obtained.

Comparative Example 2

By the use of the same devices and procedure as in Example 1, 31.66 g (0.148 mole) of APMS (para = 100%) and 23.91 g (0.0742 mole) of BTDA were thrown into 500 g of 2-methoxy ethanol. Reaction was then performed at 30 ° C for 2 hours and continuously at 110 ° C for 2 hours in order to obtain a light-brown transparent imide oligomer.

For reference, Table 1 shows amounts of the raw materials used in Examples 1 to 10 and Comparative Examples 1 and 2, i.e., a, b and c moles, as well as values of b/a and c/a.

Table 1

| | a mole | b mole | c mole | b/a | c/a |
|---|---|---|---|---|---|
| Example 1 | 0.0116 | 0.0231 | 0.231 | 1.99 | 19.9 |
| Example 2 | 0.00795 | 0.0159 | 0.238 | 2.00 | 29.9 |
| Example 3 | 0.0256 | 0.0512 | 0.256 | 2.00 | 10.0 |
| Example 4 | 0.0838 | 0.168 | 0.168 | 2.00 | 2.00 |
| Example 5 | 0.0593 | 0.119 | 0.0593 | 2.01 | 1.00 |
| Example 6 | 0.0651 | 0.130 | 0.0325 | 2.00 | 0.50 |
| Example 7 | 0.0238 | 0.0451 | 0.226* | 1.89 | 9.50 |
| Example 8 | 0.0593 | 0.119 | 0.0593 | 2.01 | 1.00 |
| Example 9 | 0.0593 | 0.119 | 0.0593 | 2.01 | 1.00 |
| Example 10 | 0.0593 | 0.119 | 0.0593 | 2.01 | 1.00 |
| Comp. Ex. 1 | 0 | 0 | 0.267 | - | - |
| Comp. Ex. 2 | 0.0742 | 0.148 | 0 | 1.99 | 0 |

* 0.226 = 0.113 + 0.113

Examples 11 to 20 and Comoparative Examples 3 and 4

Glass plates were coated with the respective varnishes synthesized in Examples 1 to 10 and Comparative Examples 1 and 2, and calcination was then given at 300 ° C for 1 hour in an electric furnace, so that coating films each having a thickness of 1.5 µm were formed on the glass plates.

Coating properties of the varnishes for the preparation of the imido group-containing cured silicon material regarding the present invention were tested as follows, and evaluation standards of the cured materials will be interpreted below. Table 2 shows the results of the coating properties and surface hardness (pencil hardness JIS K5400) of the cured materials. Incidentally, Fig. 2 shows the infrared absorption spectrum of the cured material regarding the present invention obtained in Example 11.

(Test Procedure of Coating Properties)

Each varnish was filtered through a filter having a thickness of 0.2 µm to remove dusts therefrom, was then put dropwise on a glass plate, and was spin-coated by means of a spinner. The glass plate with the varnish was calcined at 300 ° C for 1 hour in an electric furnace to form a cured coating film. The latter was then visually observed.

The estimation of "good" was given in the case that all of the next reguirement were satisfied:

(1) Formation of the coating film having substantially uniform thickness all over the glass plate.
(2) Smoothness on the surface of the coating film.
(3) Absence of cracks.

Table 2

| | Coating Liquid | Coating Properties | Surface Hardness |
|---|---|---|---|
| Example 11 | Example 1 | Good | ≥9H |
| Example 12 | Example 2 | " | " |
| Example 13 | Example 3 | " | " |
| Example 14 | Example 4 | " | " |
| Example 15 | Example 5 | " | " |
| Example 16 | Example 6 | " | " |
| Example 17 | Example 7 | " | " |
| Example 18 | Example 8 | " | " |
| Example 19 | Example 9 | " | " |
| Example 20 | Example 10 | " | " |
| Comp. Ex. 3 | Comp. Ex. 1 | Cracks | - |
| Comp. Ex. 4 | Comp. Ex. 2 | Good | 6H |

(Test of Heat Resistance)

By the use of a thermobalance TGD5000 made by Shinku Riko Co., Ltd., each coating film formed for the tests of the above-mentioned coating properties and surface hardness was heated from ordinary temperature to 700 °C at a temperature rise rate of 10 °C/minute, and at this time, weight reduction of the coating film was measured. The results are set forth in Table 3.

Table 3

| Test of Heat Resistance | Coating Liquid | Weight Reduction (wt%) |
|---|---|---|
| Example 11 | Example 1 | 8.3 |
| Example 12 | Example 2 | 6.3 |
| Example 13 | Example 3 | 12.3 |
| Example 14 | Example 4 | 19.2 |
| Example 15 | Example 5 | 21.8 |
| Example 16 | Example 6 | 22.3 |
| Example 17 | Example 7 | 23.6 |
| Example 18 | Example 8 | 21.5 |
| Example 19 | Example 9 | 21.5 |
| Example 20 | Example 10 | 21.4 |
| Comp. Ex. 3 | Comp. Ex. 1 | 1.1 |
| Comp. Ex. 4 | Comp. Ex. 2 | 37.2 |

## Claims

**1.** An imido group-containing silicon oligomer which has a logarithmic viscosity number of 0.05 to 0.5 dl/g when measured at a concentration of 0.5 g/dl at a temperature of 30 ± 0.01 °C and which comprises a compound of the formula:

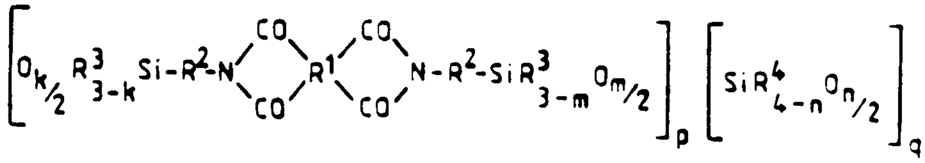

(I)

in which $R^1$ is a tetravalent carbocyclic aromatic group and the two carbonyl groups constituting one imide group are attached ortho to each other; the groups $R^2$ are each a group $-(CH_2)_t-$,

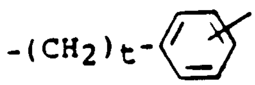, 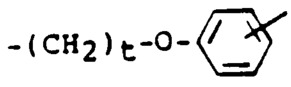 or 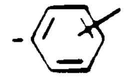

(in which t is an integer of 1 to 4); and $R^3$ and $R^4$ are the same or different and each is a $C_1$ - $C_6$ alkyl group, a phenyl group or an alkyl-substituted phenyl group having 7 to 12 carbon atoms; k and m are each 0, 1, 2 or 3 and the sum of k and m is 1 or more; n is from greater than 1 to 4, except 2, and each of p and q is a positive integer and the ratio q/p is from 0.03 to 33;

the aforesaid logarithmic viscosity number being $\eta$inh represented by the following formula:

$$\eta_{inh} = \ln(\eta/\eta_o)/C$$

wherein $\eta$ is a viscosity measured at a temperature of 30 ± 0.01 °C at a concentration of 0.5 g/dl in a solvent by the use of Ubbelohde's viscometer, $\eta_o$ is the viscosity of the solvent at the same temperature by the use of the same viscometer, and C is a concentration of 0.5 g/dl.

**2.** An oligomer as claimed in claim 1 in which $R^2$ is a phenylene group.

**3.** An oligomer as claimed in claim 1 or claim 2 in which k is 3, m is 3 and n is 4.

**4.** A cured imido group-containing cured silicon material comprising a component of the formula:

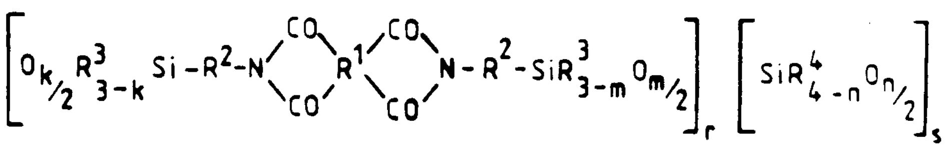 (I')

in which $R^1$, $R^2$, $R^3$, $R^4$, k, m and n have the meanings defined in claim 1 and r and s are each positive integers larger than p and q (as defined in claim 1) and the ratio s/r is from 0.03 to 33.

**5.** A cured material as claimed in claim 4 in which $R^2$ is as defined in claim 2 and/or k, m and n are as defined in claim 3.

**6.** A method for preparing an imido group-containing soluble silicon oligomer comprising a component of formula (I) as defined in claim 1, which method comprises reacting a mole of a compound of formula (II) or a diester thereof;

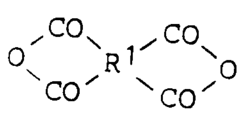 (II)

(in which $R^1$ is as defined in claim 1);
b moles of compounds of the formulae:

$H_2N-R^2-SiR^3_{3-k}X_k$ (III)

and

$H_2N\text{-}R^2\text{-}SiR_3{}^{3}{}_{3-m}X_m$ (III')

(in which $R^2$, $R^3$, k and m are as defined in claim 1 and X is a halogen atom or an alkoxy, acetoxy or hydroxyl group); and
c moles of a compound of the formula:

$SiR^4{}_{4-n}X_n$ (IV)

(in which R and n are as defined in claim 1);
the ratio of the compounds of formula (II), (III), (III') and (IV) satisfying the equations:

$1.8 \leqq b/a \leqq 2.2$ (V)

$0.03 \leqq c/a \leqq 33$ (VI)

in a solvent in an amount of 70% or more by weight based on the total weight of the reaction mixture, at a temperature of 0 to 200 °C for 0.2 to 40 hours.

**7.** A method as claimed in claim 6 in which three or four kinds of compouonds of the formulae (II), (III), (III') and (IV) are mixed; the mixture is reacted at a temperature of 0 to 200 °C for 0.2 to 10 hours; and the reaction is further continued at a temperature of 60 to 200 °C for 0.2 to 30 hours.

**8.** A method as claimed in claim 7 in which an acid and/or a small amount of water are added to the reaction mixture after reaction at 0 to 200 °C for 0.2 to 10 hours and reaction is then further continued at a temperature of 60 to 200 °C for 0.2 to 20 hours.

**9.** A modification of the method claimed in claim 8 in which two or three kinds of compounds of formulae (II), (III), (III') are mixed and then reacted at a temperature of 0 to 200 °C for 0.2 to 10 hours; the compound of formula (IV) is added thereto; and the reaction is further continued at a temperature of 60 to 200 °C for 0.2 to 20 hours.

**10.** A method as claimed in claim 9 in which, after the compounds of (II), (III), (III') have been mixed and reacted at a temperature of 0 to 200 °C for 0.2 to 10 hours, the compound of formula (IV) and an acid and/or a small amount of water are added thereto; and reaction is further continued at a temperature of 60 to 200 °C for 0.2 to 20 hours.

**11.** A method for preparing an imido group-containing cured silicon material which comprises heating, at a temperature of 50 to 500 °C, a solution containing the imido group-containing soluble silicon oligomer obtained by the method of Claim 7, in order to evaporate the solvent and to simultaneously crosslink/cure the oligomer.

**Patentansprüche**

**1.** Imidogruppenhaltiges Siliciumoligomer mit einer logarithmischen Viskositätszahl von 0,05 bis 0,5 dl/g, gemessen bei einer Konzentration von 0,5 g/dl bei einer Temperatur von 30 ± 0,01 °C, umfassend eine Verbindung der Formel:

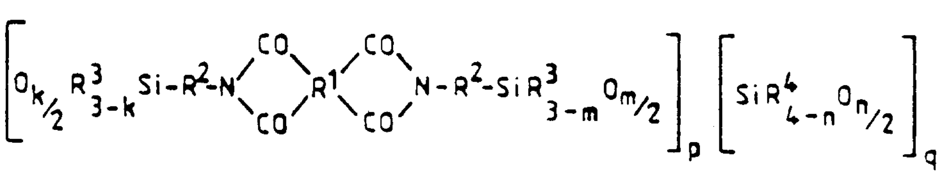

(I)

worin $R^1$ eine vierwertige carbocyclische aromatische Gruppe und die beiden eine Imidgruppe bildenden Carbonylgruppen in ortho-Stellung zueinander angeordnet sind; die Gruppen $R^2$ jeweils eine der

Gruppen
$-(CH_2)_t-$,

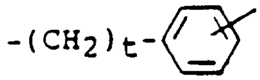, 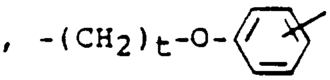 oder 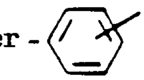

(worin t eine ganze Zahl von 1 bis 4 ist) bedeuten; und $R^3$ und $R^4$, die gleich oder verschieden sind, jeweils eine $C_1$-$C_6$ Alkylgruppe, eine Phenylgruppe oder eine alkylsubstituierte Phenylgruppe mit 7 bis 12 Kohlenstoffatomen bedeuten; k und m jeweils 0, 1, 2 oder 3 sind und die Summe aus k und m 1 oder mehr beträgt; n größer als 1 und höchstens 4, aber nicht 2, ist, und p und q jeweils eine positive ganze Zahl bedeuten und das Verhältnis q/p 0,03 bis 33 beträgt; wobei die genannte logarithmische Viskositätszahl $\eta_{inh}$ der folgenden Formel entspricht:

$$\eta_{inh} = \ell n(\eta/\eta_o)/C$$

worin $\eta$ eine bei einer Temperatur von 30 ± 0,01 °C und bei einer Konzentration von 0,5 g/dl in einem Lösungsmittel mit Hilfe eines Ubbelohde-Viskosimeters gemessene Viskosität, $\eta_0$ die Viskosität des Lösungsmittels bei derselben Temperatur und unter Verwendung desselben Viskosimeters und C eine Konzentration von 0,5 g/dl bedeuten.

**2.** Oligomer nach Anspruch 1, worin $R^2$ eine Phenylengruppe ist.

**3.** Oligomer nach Anspruch 1 oder 2, worin k 3, m 3 und n 4 ist.

**4.** Gehärtetes imidogruppenhaltiges Siliciummaterial, umfassend eine Komponente der Formel:

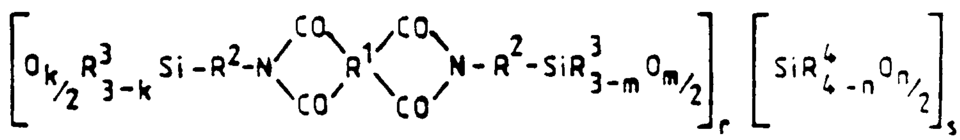 (I')

worin $R^1$, $R^2$, $R^3$, $R^4$, k, m und n die in Anspruch 1 definierten Bedeutungen besitzen und r und s jeweils positive ganze Zahlen sind, die größer als p und q (wie in Anspruch 1 definiert) sind und worin das Verhältnis s/r 0,03 bis 33 beträgt.

**5.** Gehärtetes Material nach Anspruch 4, worin $R^2$ definiert ist wie in Anspruch 2 und/oder k, m und n definiert sind wie in Anspruch 3.

**6.** Verfahren zur Herstellung eines imidogruppenhaltigen, löslichen Siliciumoligomers, das eine Komponente der Formel (I), wie in Anspruch 1 definiert, umfaßt, bei dem a Mol einer Verbindung der Formel (II) oder eines Diesters davon

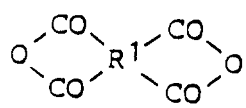 (II)

(worin $R^1$ wie in Anspruch 1 definiert ist) umgesetzt werden mit
b Mol Verbindungen der Formeln

$H_2N$-$R^2$ - $SiR^3{}_{3-k}X_k$ (III)

und

$H_2N\text{-}R^2\text{-}SiR_3{}^{3}{}_{3-m}X_m$ (III')

(worin $R^2$, $R^3$, k und m wie in Anspruch 1 definiert sind und X ein Halogenatom oder eine Alkoxy-, Acetoxy- oder Hydroxylgruppe ist); und mit
c Mol einer Verbindung der Formel

$SiR^4{}_{4-n}X_n$ (IV)

(worin R und n wie in Anspruch 1 definiert sind);
wobei das Verhältnis der Verbindungen der Formeln (II), (III), (III') und (IV) den Gleichungen genügen:

$1{,}8 \leqq b/a \leqq 2{,}2$ (V)

$0{,}03 \leqq c/a \leqq 33$ (VI)

in einem Lösungsmittel in einer Menge von 70 oder mehr Gew.%, bezogen auf das Gesamtgewicht des Reaktionsgemischs, bei einer Temperatur von 0 bis 200 °C während 0,2 bis 40 Stunden.

**7.** Verfahren nach Anspruch 6, bei dem drei oder vier Arten von Verbindungen der Formeln (II), (III), (III') und (IV) vermischt werden, das Gemisch bei einer Temperatur von 0 bis 200 °C während 0,2 bis 10 Stunden umgesetzt wird und die Umsetzung bei einer Temperatur von 60 bis 200 °C 0,2 bis 30 Stunden lang fortgesetzt wird.

**8.** Verfahren nach Anspruch 7, bei dem eine Säure und/oder eine geringe Menge Wasser dem Reaktionsgemisch nach der Reaktion bei 0 bis 200 °C während 0,2 bis 10 Stunden zugesetzt wird und die Umsetzung dann bei einer Temperatur von 60 bis 200 °C 0,2 bis 20 Stunden lang fortgesetzt wird.

**9.** Abänderung des Verfahrens gemäß Anspruch 8, bei dem zwei oder drei Arten von Verbindungen der Formeln (II), (III), (III') vermischt und dann bei einer Temperatur von 0 bis 200 °C 0,2 bis 10 Stunden lang umgesetzt werden, die Verbindung der Formel (IV) zugegeben wird und die Umsetzung bei einer Temperatur von 60 bis 200 °C 0,2 bis 20 Stunden lang fortgesetzt wird.

**10.** Verfahren nach Anspruch 9, bei dem, nachdem die Verbindungen der Formeln (II), (III), (III') miteinander vermischt und bei einer Temperatur von 0 bis 200 °C 0,2 bis 10 Stunden lang umgesetzt worden sind, die Verbindung der Formel (IV) und eine Säure und/oder eine geringe Menge Wasser Zugegeben werden und die Umsetzung bei einer Temperatur von 60 bis 200 °C 0,2 bis 20 Stunden lang fortgesetzt wird.

**11.** Verfahren zur Herstellung eines imidogruppenhaltigen, gehärteten Siliciummaterials, bei dem eine das imidogruppenhaltige lösliche Siliciumoligomer, das nach dem Verfahren gemäß Anspruch 7 erhalten wurde, enthaltende Lösung auf eine Temperatur von 50 bis 500 °C erhitzt wird, um das Lösungsmittel zu verdampfen und gleichzeitig das Oligomer zu vernetzen/zu härten.

## Revendications

**1.** Un oligomère contenant du silicium et des groupes imide qui a un nombre logarithmique de viscosité de 0,05 à 0,5 dl/g quand il est mesuré à une concentration de 0,5 g/dl à une température de 30 ± 0,01 °C et qui comprend un composé de formule:

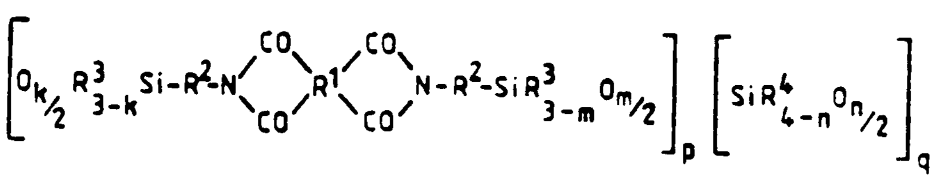

(I)

dans laquelle $R_1$ est un groupe carbocyclique aromatique tétravalent et les deux groupes carbonyles constituant un groupe imide sont en position ortho l'un par rapport à l'autre; les groupes $R^2$ sont chacun un groupe:

$-(CH_2)_t-$,

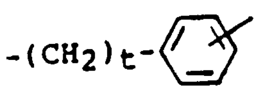, 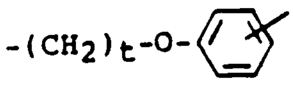 or 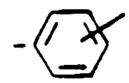

(dans lesquels t est un nombre entier de 1 à 4); et $R^3$ et $R^4$ sont égaux ou différents et chacun est un groupe alkyle $C_1$ - $C_6$, un groupe phényle ou un groupe phényle substitué par un groupe alkyle ayant 7 à 12 atomes de carbone; k et m valent chacun 0, 1, 2 ou 3 et la somme de k et de m vaut 1 ou plus; n vaut de plus de 1 à 4, sauf 2, et chacun de p et de q est un nombre entier positif et le rapport q/p est de 0,03 à 33;

ledit nombre logarithmique de viscosité $\eta_{inh}$ étant représenté par la formule suivante:

$$\eta_{inh} = \ln(\eta/\eta_0)/C$$

dans laquelle $\eta$ est une viscosité mesurée à une température de 30 ± 0,01 °C à une concentration de 0,5 g/dl dans un sol vent au moyen d'un viscosimètre d'Ubbelohde, $\eta_0$ est la viscosité du solvant à la même température mesurée au moyen du même viscosimètre, et C est une concentration de 0,5 g/dl.

**2.** Un oligomère tel que revendiqué dans la revendication 1 dans lequel $R^2$ est un groupe phénylène.

**3.** Un oligomère tel que revendiqué dans la revendication 1 ou la revendication 2 dans lequel k vaut 3, m vaut 3 et n vaut 4.

**4.** Un matériau durci contenant du silicium et des groupes imide comprenant un composant de formule:

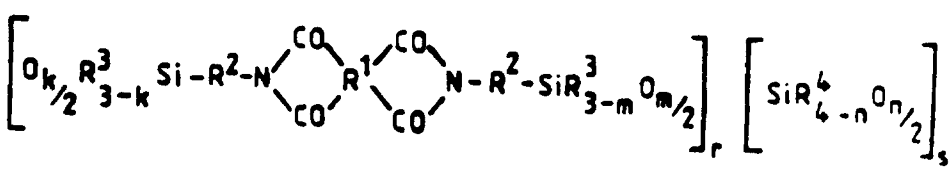 (I')

dans laquelle $R^1$, $R^2$, $R^3$, $R^4$, k, m et n ont les significations définies dans la revendication 1 et r et s sont chacun un nombre entier positif supérieur à p et à q (tels que définis dans la revendication 1) et le rapport s/r est de 0,03 à 33.

**5.** Un matériau durci tel que revendiqué dans la revendication 4 dans lequel $R^2$ est tel que défini dans la revendication 2 et/ou k, m et n sont tels que définis dans la revendication 3.

**6.** Une méthode pour préparer un oligomère soluble contenant du silicium et des groupes imide comprenant un composant de formule (I) tel que défini dans la revendication 1, laquelle méthode comprend la mise à réagir de a mode d'un composé de formule (II) ou d'un diester de ce composé;

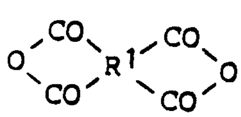 (II)

(dans laquelle $R^1$ est tel que défini dans la revendication 1); b moles de composés de formules:

$H_2N-R^2-SiR^3_{3-k}X_k$ (III)

et

$H_2N\text{-}R^2\text{-}SiR^3{}_{3-m}X_m$ (III')

(dans lesquelles $R^2$, $R^3$, k et m sont tels que définis dans la revendication 1 et X est un atome d'halogène ou un groupe alkoxy, acétoxy ou hydroxyle);
et
c mode d'un composé de formule:

$SiR^4{}_{4-n}X_n$ (IV)

(dans laquelle R et n sont tels que définis dans la revendication 1);
les proportions des composés de formules (II), (III), (III') et (IV) satisfaisant les équations:

$1{,}8 \leqq b/a \leqq 2{,}2$ (V)

$0{,}03 \leqq c/a \leqq 33$ (VI)

dans un solvant en quantité de 70% ou plus en poids en se basant sur le poids total des mélanges réactionnels, à une température de 0 à 200 °C durant de 0,2 à 40 heures.

**7.** Une méthode telle que revendiquée dans la revendication 6 dans laquelle trois ou quatre types de composés de formules (II), (III), (III') et (IV) sont mélangés; le mélange est mis à réagir à une température de 0 à 200 °C durant 0,2 à 10 heures; et la réaction est prolongée à une température de 60 à 200 °C durant 0.2 à 30 heures.

**8.** Une méthode telle que revendiquée dans la revendication 7 dans laquelle un acide et/ou une petite quantité d'eau sont ajoutés au mélange réactionnel après réaction de 0 à 200 °C durant de 0,2 à 10 heures et la réaction est alors prolongée à une température de 60 à 200 °C durant de 0,2 à 20 heures.

**9.** Une modification de la méthode revendiquée dans la revendication 8 dans laquelle deux ou trois types de composés de formules (II), (III). (III') sont mélangés et ensuite mis à réagir à une température de 0 à 200 °C durant de 0,2 à 10 heures; le composé de formule (IV) y est ajouté; et la réaction a été prolongée à une température de 60 à 200 °C durant de 0.2 à 20 heures.

**10.** Une méthode telle que revendiquée dans la revendication 9 dans laquelle, après que les composés de (II), (III), (III') aient été mélangés et mis à réagir à une température de 0 à 200 °C durant de 0.2 à 10 heures, le composé de formule (IV) et un acide et/ou une petite quantité d'eau y sont alors ajoutés et la réaction a été prolongée à une température de 60 à 200 °C durant de 0.2 à 20 heures.

**11.** Une méthode pour préparer un matériau durci contenant du silicium et des groupes imide qui comprend le chauffage, à une température de 50 à 500 °C, d'une solution contenant l'oligomère soluble contenant du silicium et des groupes imide obtenu par la méthode de la revendication 7, de manière à évaporer le solvant et à simultanément ponter/durcir l'oligomère.

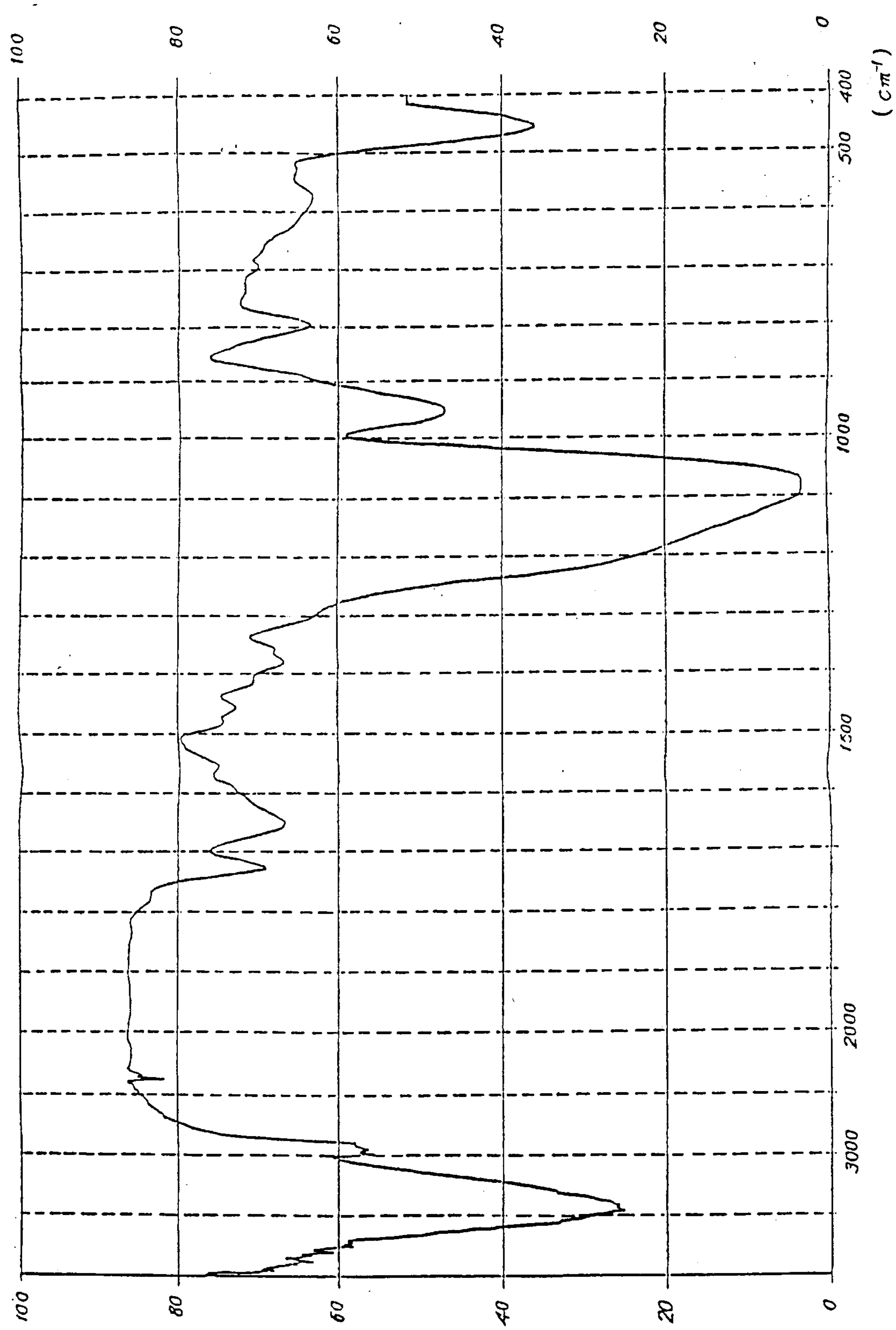


Fig. 1

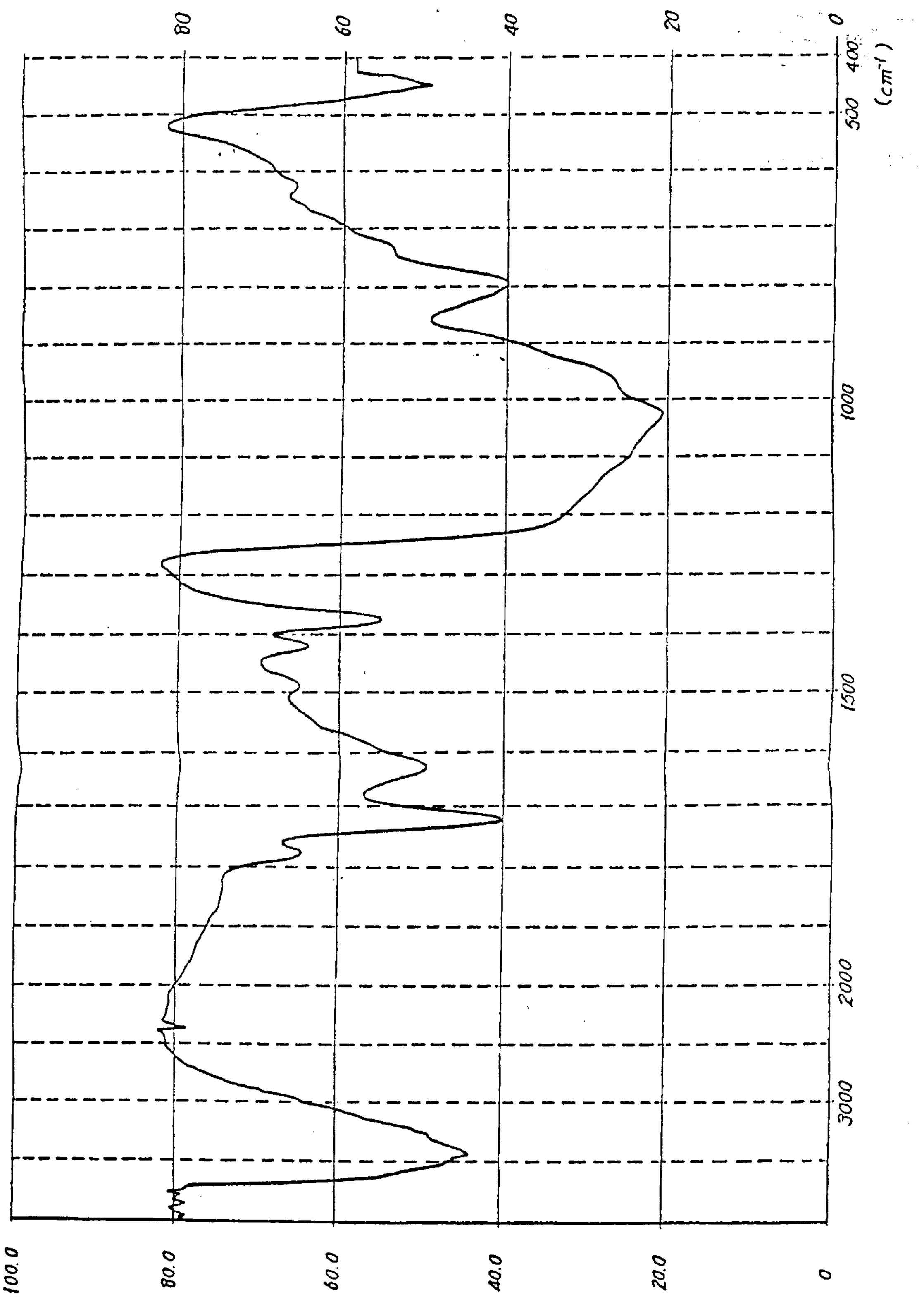
80
60
40
20
0
400
500
(cm⁻¹)
1000
1500
2000
3000
100.0
80.0
60.0
40.0
20.0
0

Fig. 2